# EUROPEAN PATENT SPECIFICATION

(11) **EP 3 544 391 B1**
(45) Date of publication and mention of the grant of the patent: **05.07.2023**
(21) Application number: 17797431.8
(22) Date of filing: 25.09.2017
(51) Int. Cl.: H05H 1/24, B64C 23/00, B64C 23/04, B64D 15/12, H05B 1/02, H05B 6/00, B64D 15/20, B64D 15/22

(54) **ICE DETECTION/PROTECTION AND FLOW CONTROL SYSTEM**
EISERKENNUNG/SCHUTZ UND DURCHFLUSSREGELSYSTEM
SYSTEME DE DÉTECTION DE GLACE /PROTECTION DE GLACE ET DE COMMANDE DE FLUX

(30) Priority: 29.09.2016 PT 2016109643
(43) Date of publication of application: 25.09.2019
(73) Proprietor: Universidade Da Beira Interior, 6201-001 Covilhã (PT)
(72) Inventor: ABDOLLAHZADEHSANGROUDI, Mohammadmahdi, 6200-344 Covilhã (PT); PÁSCOA MARQUES, José Carlos, 6200-552 Covilhã (PT); FREIRE RODRIGUES, Frederico Miguel, 6200-641 Sarzedo (PT)
(74) Representative: Neves, Ana
(86) International application number: PCT/IB2017/055805
(87) International publication number: WO 2018/060830

(56) References cited:
- EP-A1- 2 505 782
- DE-A1-102006 028 614
- US-A1- 2010 133 386
- US-A1- 2011 048 025

## Description

### Technical domain

The present invention relates to a smart ice detection/ protection system with ice detection, anti-icing and deicing operating modes and flow control, based on printing of dielectric barrier discharge sliding plasma actuators.

### Summary

The present invention discloses a system capable of controlling the flow and simultaneously performing ice detection, preventing ice formation and deicing on surfaces by making use of a dielectric barrier discharge sliding plasma actuator.

Generally, most in-flight aircraft deicing and anti-icing methods only protect the surfaces and the most critical components of the aircraft. The present invention is useful for detecting and preventing the formation of ice on aircraft surfaces and has the following main advantages: reduced weight, low maintenance cost, no environmental impact, an electronic operation and the combination of a deicing and anti-icing system with a flow control system and ice detection sensors.

The present invention can be applied to any type of surfaces without great complexity. It can operate continuously in anti-icing mode or intermittently in deicing mode. When a sufficient high voltage level is applied to this system, the surface temperature rises to a temperature above the melting temperature of water and the surface heating due to the operation of the dielectric barrier discharge plasma actuator prevents the accumulation of ice on the front edge of the wing. In addition, if a high pulse voltage of the nanosecond order is applied to the actuator, it will induce shock waves to the surface that expel the ice and further remove ice that may accumulate after the portion of the surface area, which is effectively heated and protected. The energy consumed by the present invention is lower than that of most traditional ice accumulation protection systems, and has a flow control capacity, which allows the reduction of resistance and noise.

In parallel, this invention further relates to a smart anti-icing and deicing system based on plasma actuators, which can be used as an ice-formation detection sensor in order to detect the start of its formation and to warn if a critical ice level is achieved.

Using circuit-printing technology to produce this system, temperature and pressure sensors can be easily printed along with dielectric barrier discharge plasma actuators. In this way, the application of this system ensures that the various sensors outside the aircraft are free of ice and snow.

The present invention describes an ice detection/ protection system with ice detection, anti-icing and deicing operating modes and flow control, as defined in claim 1, and the use of said system on aircraft surfaces, as defined in claim 12. Further embodiments of the invention are defined in the dependent claims.

### Prior Art

The invention described herein is based on a system that enhances deicing and anti-icing efficiency through a dielectric barrier discharge (DBD) sliding actuator and an electrode energized by nanosecond range pulses which enable the detection of ice through the DBD actuator that acts as an ice-forming sensor.

WO 2014/122568 [1] discloses a system for preventing the formation of ice on the surface of aircrafts comprising a DBD plasma actuator. The system has been designed to use alternating voltage modulated at different frequencies and amplitudes and also in pulsed mode. This system uses the surface temperature as a signal to the control module that activates the deicing system and can be manufactured by circuit printing. Although this system uses DBD plasma actuators to perform deicing, it does not use the DBD plasma actuator as an ice detector sensor. In addition, the area covered by the actuator is limited, and since it contains only one electrode exposed per actuator, it does not contain any type of mechanism to control the accumulation of ice in the area that is not effectively heated by the actuator.

EP 2365219 A2 [2], US 8038397 B2 [3] and US20110135467 A1 [4] describe an air turbine blade deicing system which includes an electrically powered plasma actuator applied to a desired area of the air turbine blade. The plasma actuator is connected to the power supply, which includes a waveform controller configured to control the input voltage level, pulse width, frequency, duty cycle, and waveform. The system described herein may be manufactured in the form of tape, which can be applied to different surfaces. Although DBD plasma actuators are used in the above system to perform deicing, this type of system does not include an ice detector sensor. On the other hand, the area encompassed per actuator is limited and, since it only contains an electrode exposed per actuator, it does not contain any type of mechanism to control the accumulation of ice in the area that is not effectively heated by the actuator.

CA 2908979 A1 [5] relates to a separating tip of an axial turbomachine with a deicing system. The disclosed device has two annular layers of dielectric material partially forming the separation surface, an electrode forming the upstream edge, an electrode forming the outer wall of the separating tip, an electrode forming the outer shell supporting the blades and an electrode that delimits the primary flow. The device generates plasmas that oppose the presence of ice in the partitions of the separating tip by making use of a power supply, which provides a sinusoidal or square alternating voltage signal with periods of a few nanoseconds. Although the above system makes use of DBD plasma actuators for performing deicing, this system does not include an ice detector sensor, the area covered per actuator is limited and, since it only has one exposed electrode per actuator, it does not contain any type of mechanism to control the accumulation of ice in the area that is not effectively heated by the actuator.

WO 2015024601 A1 [6] discloses a system for controlling the boundary layer of a fluid flow on the surface of a body. The system comprises a nanosecond range pulse plasma actuator with dielectric/resistive barrier discharge and a surface pressure measurement tip, which allows the measurement of flow characteristics and subsequent emission of signals to a controller that activates the system. Through this invention, low efficiency and low yield problems of NS-DBD plasma actuators were solved and a device, system and method were provided that allow performing different tasks within the scope of active flow control. For this purpose, the dielectric barrier was considered to be resistive or dielectric, and the use of a resistive barrier, instead of a dielectric barrier, allows manipulation of the thermal effect, which in turn broadens the field of applications. Although the above system makes use of DBD plasma actuators for performing deicing, this system does not include an ice detector sensor, the area covered per actuator is limited and, since it only has one exposed electrode per actuator, it does not contain any type of mechanism to control the accumulation of ice in the area that is not effectively heated by the actuator.

CN 102991666 A [7] discloses a laminated board for aircraft coating which has lift-up features, resistance reduction, flow control and ice-formation prevention functions. The aircraft laminate coating comprises an asymmetrically distributed DBD plasma actuator, which is connected to a power supply capable of energizing the actuator with high alternating voltage or high voltage with nanosecond range pulses. The ice-formation prevention function is performed by means of air heating due to actuator operation and also by the wave pulse expansion function. Although the above system makes use of DBD plasma actuators for performing deicing, this system does not include an ice detector sensor, the area covered per actuator is limited and, since it only has one exposed electrode per actuator, it does not contain any type of mechanism to control the accumulation of ice in the area that is not effectively heated by the actuator.

CN 104890881 A [8] discloses a dielectric barrier discharge plasma device and an easy-to-use deicing method in aircraft coatings and which enables rapid and efficient deicing of its coating. This device comprises a plasma actuator power supply and a plasma actuator, the latter including an exposed electrode connected to the positive pole of the power supply, an embedded electrode connected to the negative pole and an insulation layer. Although the above system makes use of DBD plasma actuators for performing deicing, this system does not include an ice detector sensor, the area covered per actuator is limited and, since it only has one exposed electrode per actuator, it does not contain any type of mechanism to control the accumulation of ice in the area that is not effectively heated by the actuator.

US 20080023589 A1 [9] and US7744039 [10] describe systems and methods for flow control from electrical pulses. The systems and methods described in said document specifically use two electrodes and one dielectric layer, thereby providing a system dissimilar to the system described herein, which is based on the use of three electrodes, two exposed ones and one embedded, and which give the actuator extension capacity of the plasma discharge zone, as well as the possibility of using shock waves, which prevent a new accumulation of ice in the area that is not effectively heated by operation of the actuator. On the other hand, the presented system does not provide any functionality for detecting ice formation. The invention referred to in the document is technically distinguished from the invention proposed herein since it does not provide for the use of a sliding electrode, thus presenting limitations at the level of the plasma extension area.

The use of electric fields and capacitive sensors for detecting the ice thickness has been reported in various documents which include patents US 4766369 A [11] and US 5398547 A [12] . In these documents, systems and methods of measuring ice thickness on a surface are described by generating an electric field between two electrodes. These systems are limited only to detecting ice thickness. In the present invention, ice detection is performed not by a twoelectrode sensor, but rather by a three-electrode plasma actuator, which acts as a sensor and actuator simultaneously. Thus, the present invention enables ice detection through an actuator, which, in addition, can prevent the formation and/or promote the elimination thereof on the most critical aircraft surfaces.

The present invention makes use of sliding actuators with dielectric barrier discharge, in which one of the electrodes can be energized by pulses of the nanosecond order, which allows the formation of a more extensive plasma region, which in turn enables the coating of a larger area per each set of actuators. In addition, using high voltage with nanosecond pulses, the actuator provides faster surface heating and the shock waves originated near the surface expel the ice and remove the portions of ice that accumulate after the effective heating area of the actuator. In addition, the present invention further acts as an ice formation sensor, which can be used to detect the onset of ice formation and indicate when a critical ice formation point is reached. On the other hand, by using circuit-printing technology, wide networks of actuators including temperature sensors can be manufactured, which can be easily printed together with the actuators.

### General Description

Under favourable conditions, ice formation can occur from the condensation of water droplets on the front edge of the aircraft wing. Ice accumulations are more frequent on the front edge of the wings, tail and engines, including propellers or turbine blades. Ice accumulation can lead to weight gain, creating aerodynamic imbalances, local flow disturbance, reduced performance, critical loss of control or lift, premature loss of aerodynamics, and increased resistance. Thus, in order to prevent ice formation on the surface of aircrafts, it is necessary to employ an adequate system of protection against ice accumulation. An ice protection system acts as an anti-icing system, preventing its formation, and/or acting as a deicing system, spilling the ice before it reaches a thickness deemed dangerous. Deicing can be undertaken by different methods including mechanical methods, heat generation, use of chemicals (liquid or gaseous, designed to reduce the freezing temperature of water) or a combination of various methods. Each of these methods has advantages, but also drawbacks such as high weight, energy consumption or the use of hazardous materials. In addition, some of these anti-icing and deicing methods are mechanical and highly complex and, in some cases, undermine aerodynamic performance. On the other hand, the function of most of these systems is limited to the control of ice and, when there are no conditions favourable to the formation of ice, they become useless and unnecessary for the improvement of flight performance.

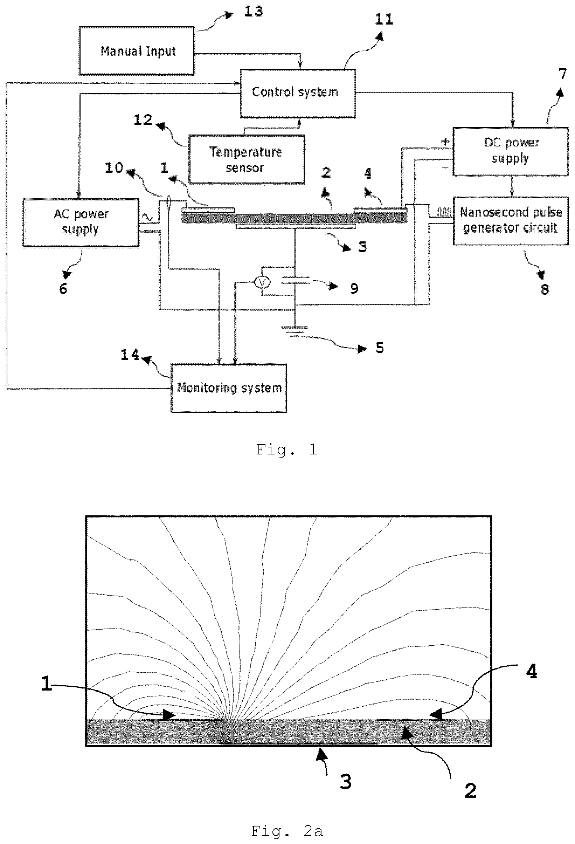

The invention described herein consists of a novel ice control system which includes a unique ice detection system and an anti-icing/deicing mechanism based on a three-electrode configuration, which makes it much more efficient. This system has low power consumption, increases the performance and resistance of the fuselage or engine, and requires little maintenance. Furthermore, it has no drawbacks in terms of aerodynamic performance, such as increased resistance, and can be used as an actuator for flow control. This ice control system is an ice-forming control system composed of anti-icing, deicing and direct ice detection technology, based on a dielectric barrier discharge sliding plasma actuator (Figure 1). This invention integrates various technologies along with its advantages including dielectric barrier discharge plasma actuators for flow control and surface heating, sliding discharge for obtaining a more extensive discharge area, nanosecond range pulse discharges for a fast surface heating, detection of ice from electrical field disturbances caused by the presence of ice and water droplets, and manufacture of this electric circuit board from printing technology. This technology takes advantage of the fact that the DBD plasma actuator can be used for both flow control and surface heating. Therefore this system is able to control the flow and simultaneously perform the deicing on surfaces. DBD plasma actuators have been of increasing interest in recent years for their use in a variety of applications. The DBD plasma actuator releases energy during the dielectric discharge, which increases the temperature of the ice by melting it and releasing it from the surface. These actuators can operate in different modes depending on the type of voltage supply signal. When the DBD operates with high AC voltage the surface temperature can reach temperatures above 80 °C for an applied voltage of 8 kVpp, wherein these temperature values can be exceeded depending on the characteristics of the dielectric material. In this way, the ionic wind created by the plasma actuator improves the heating of the surface from the convection of the heated air to the surface. On the other hand, when a DBD is energized by nanosecond pulsed voltage, the temperature near the surface is increased (400 K (126.85 °C) for pulses with duration of 50 ns) without directing the flow to the surface. It is assumed that vorticity is created by the shock wave, which is produced from the hot gas layer generated during the rapid heating process in which more than 60 % of the discharge energy is converted into heat within a period of less than 1 µs. It is assumed that the heat output of the plasma actuator consists of the energy deposited by the neutral ion collisions, elastic electron collisions, rotational excitation and vibrational excitation. The heating of the surface of plasma actuators is related to the power dissipated by the plasma discharge and to the thermal losses in the dielectric. The amplitude of the applied voltage and frequency influences the power dissipated by the plasma actuator. Therefore, in this invention a system for controlling the voltage and frequency amplitudes is also considered.

Typical DBD plasma actuator devices comprise two electrodes separated by a dielectric barrier. The protected area of ice accumulation by the present invention depends on the length of the plasma discharge region. A group of plasma actuators consisting of a set of three electrodes, known as sliding discharge actuators, is considered in this invention to provide a more extensive plasma region. These sliding DBD actuators are composed of two electrodes embedded on either side of the dielectric layer, such as in a conventional DBD device, and also a second exposed electrode fed by a direct voltage. This results in a sliding of the charge space between the two electrodes exposed to air [13].

This discharge is as stable as the discharge from a simple DBD plasma actuator and has the advantage that it can be used in large scale applications because the extension of the discharge can be increased over the entire distance present between the two exposed electrodes. By sliding discharge the plasma region is greatly increased, the ionic wind created near the surface is thicker and the maximum velocity of the jet produced is slightly increased. Water droplets from melting ice in the regions protected by the DBD actuator may re-freeze again in the area where the DBD actuator is not as effective generating a secondary ice layer. This is because the temperature of the surface heated by the plasma decreases along the plasma region. Therefore, in order to extend the deposition of energy on the surface by the DBD sliding plasma actuator, the second exposed electrode of the actuator operates on a positive /negative continuous voltage with a tendency for nanosecond range pulses. Thus, by means of rapid surface heating and also the formation of micro-shockwaves, this system also acts as a system that prevents reforming of ice in the area behind the effective deicing area. Thus, the advantages of the sliding discharge and the advantages of a DBD actuator energized by nanosecond range pulses are combined.

Ice sensors can also be integrated into the protection system against ice accumulation allowing more information to be gained, which in turn helps to increase the efficiency of the device. In most aircraft ice detection systems, sensors can not be placed exactly on the wing surfaces since they must be free from possible ice formations. On the other hand, the addition of salient sensors seriously damages the aerodynamics of the aircrafts. Although several attempts have been made to produce ice detectors these are limited by their accuracy, their inability to distinguish ice and water [14] and their inability to measure ice thickness. DBD plasma actuators can be considered as a capacitor system and, consequently, the present invention employs the same principles of operation as an ice capacitor detector and uses the DBD plasma actuator as an ice detector sensor. Several capacitive ice detectors are described in the literature for detecting layers of ice on a surface. The physical value of a capacitor depends on the dielectric constant of the insulation material. The electrical properties of water are changed according to their physical state (solid, liquid or gaseous), so if for example, we have water vapour between the electrodes of the capacitor and it solidifies to form ice, the capacity value of the capacitor will vary. When a voltage differential is applied between the electrodes, an electric current is induced through the capacitor, which leads to an accumulation of electrons. The difference between ice and water can be determined from the measurement of changes in the dielectric constant, and this measurement can be performed from the measurement of the electrode load.

Printing technologies such as inkjet printing can be used to produce a network of DBD plasma actuators allowing the coating of large surfaces. Circuit printing technologies have received wide attention as a viable alternative to the production of actuators and sensors due to the simplicity of processing steps, reduction of materials used, low manufacturing costs and simple standardization techniques. In addition, this technology allows the control of the thickness and amount of ink applied, allows a good definition of the printed areas and the possibility of developing systems on surfaces that are not planar allowing the systems to adapt according to the desired requirements. The wide variety of materials available for printing (conductors, semiconductors and dielectrics) as well as the possibility of developing new formulations allow the production of DBD plasma actuators from printing techniques [15, 16].

Coupling of sensors and actuators allows the reduction of the size of the DBD actuator allowing the same control effect at lower voltages and thereby increasing efficiency.

### Description of the Drawings

**Figure 1****:** Block diagram of the protection system against ice accumulation, in which (1) represents the exposed AC electrode, (2) represents the dielectric layer, (3) represents the embedded electrode, (4) represents the sliding/nanosecond electrode, (5) represents the ground plane, (6) represents the AC power supply, (7) represents the DC power supply, (8) represents the nanosecond range pulse generator circuit, (9) represents the monitoring capacitor, (10) represents the high voltage probe, (12) represents the temperature sensor, (13) represents the control signal input module and (14) represents the monitoring system.

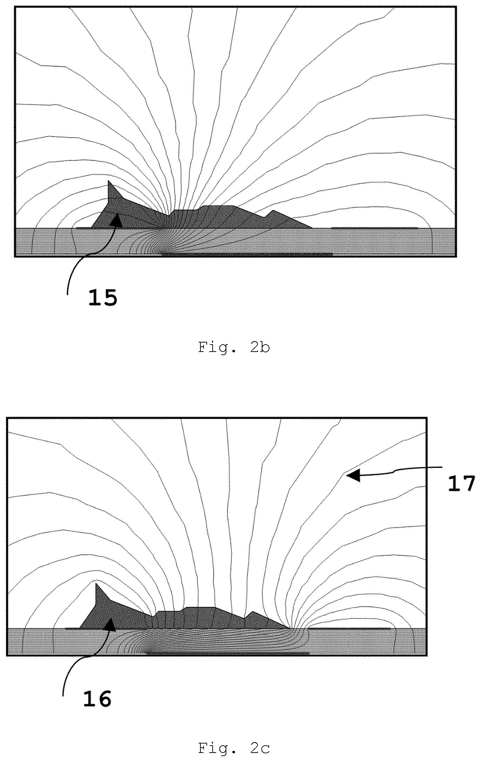

**Figure 2****:** Variation of the electric field due to different contaminations a) without contamination b) ice surface Z c) water In which (1) represents the exposed AC electrode, (2) represents the dielectric layer, (3) represents the embedded electrode, (4) represents the sliding/nanosecond electrode, (15) represents the ice layer, (16) represents the water layer, (17) represents the electric field.

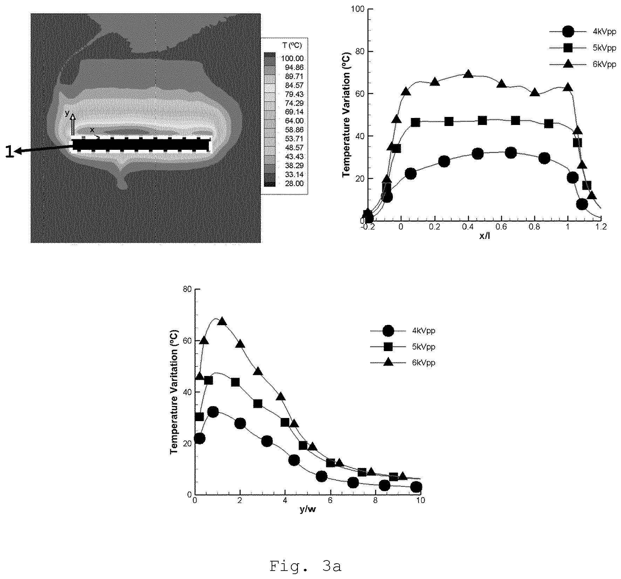

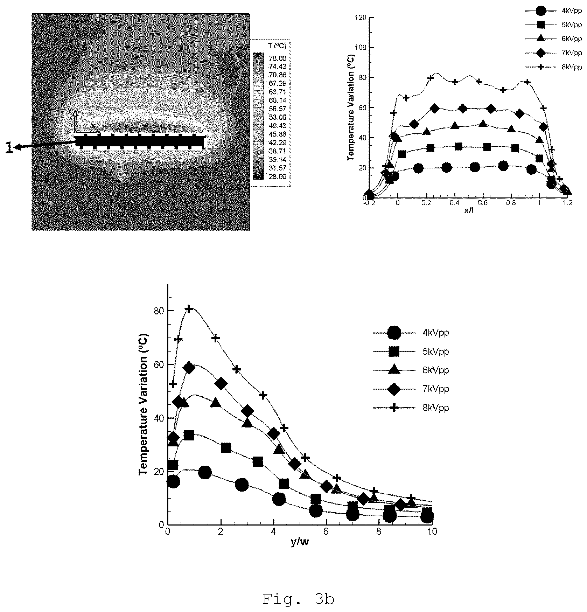

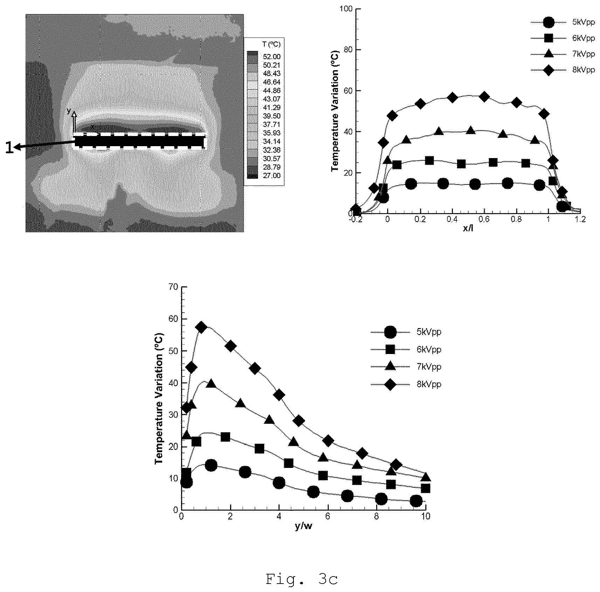

**Figure 3****:** I) Images obtained by Infrared techniques II) Spatial variation of temperature along the x axis III) Spatial variation of temperature along the y axis. For a) 0.3 mm Kapton b) 0.6 mm Kapton c) 1.12 mm Polycarbonate + Kapton. In which (1) represents the exposed AC electrode.

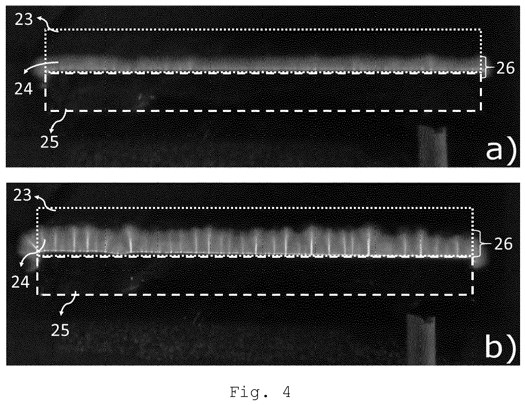

**Figure 4****:** Dielectric barrier discharge for two different applied voltages. In which (3) represents the embedded electrode, (18) represents the plasma discharge region, (1) represents the exposed AC electrode and (19) represents the length of the plasma.

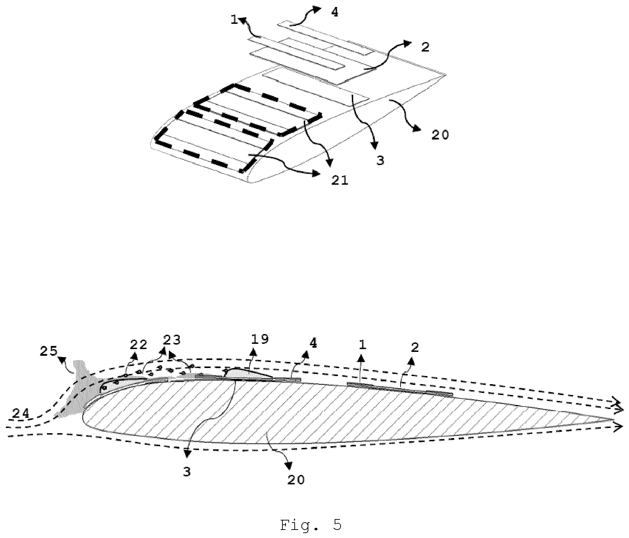

**Figure 5****:** Different components of the DBD sensor/actuator deicing system. In which (1) represents the exposed AC electrode, (2) represents the dielectric layer, (4) represents the sliding/nanosecond electrode, (3) represents the embedded electrode, (20) represents a wing profile, (21) represents the sensor/actuator applied to the front surface of the wing, (19) represents the length of the plasma discharge region, (22) represents the water droplets, (23) represents the ice layer in the area behind the effective area of the plasma, (24) represents the flow lines, (25) represents the ice layer in the front area of the wing.

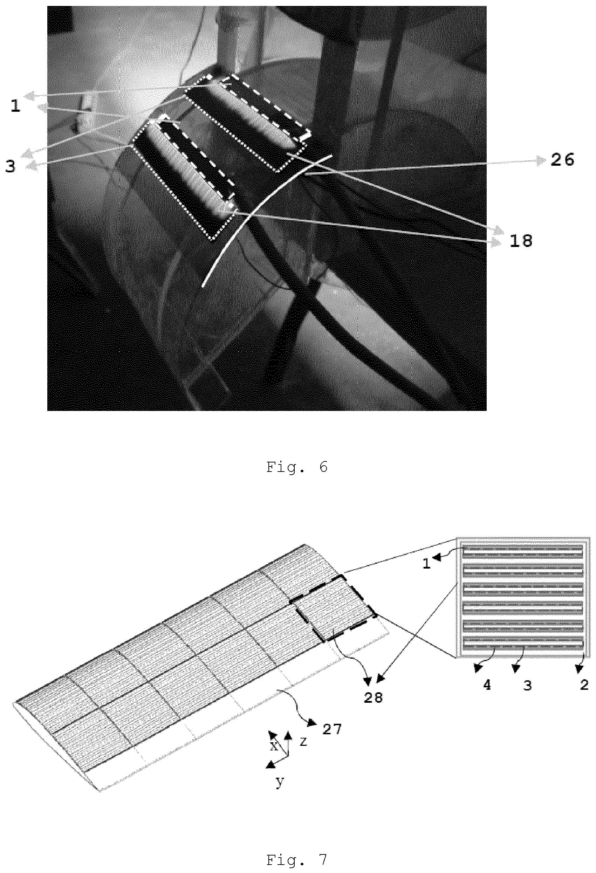

**Figure 6****:** Multiple DBD plasma actuators for flow control on curved surfaces. In which (26) represents the curved surface, (1) represents the exposed electrode AC, (3) represents the embedded electrode and (18) represents the plasma discharge region.
**Figure 7****:** Network of DBD sensor/actuator systems manufactured from circuit printing technology. In which (27) schematically represents the wing of an aircraft, (28) represents the network of sensors/DBD actuators manufactured as a sheet, (1) represents the exposed AC electrode, (2) represents the dielectric layer, (3) represents the embedded electrode, (4) represents the sliding/nanosecond electrode.

### Matching numbers

**(1):** represents the exposed AC electrode.
**(2):** represents the dielectric layer.
**(3):** represents the embedded electrode.
**(4):** represents the sliding/nanosecond electrode.
**(5):** represents the ground plane.
**(6):** represents the AC power supply.
**(7):** represents the DC power supply.
**(8):** represents the nanosecond range pulse generator circuit.
**(9):** represents the monitoring capacitor.
**(10):** represents the high voltage probe.
**(11):** represents the control module.
**(12):** represents the temperature sensor.
**(13):** represents the control signal input module.
**(14):** represents the monitoring system.
**(15):** represents the ice layer.
**(16):** represents the water layer.
**(17):** represents the electric field.
**(18):** represents the plasma discharge region.
**(19):** represents the length of the plasma.
**(20):** represents a wing profile.
**(21):** represents the sensor/actuator applied to the front surface of the wing.
**(22):** represents water droplets.
**(23):** represents the ice layer in the area behind the effective area of the plasma.
**(24):** represents the flow lines.
**(25):** represents the ice layer in the front area of the wing.
**(26):** represents a curved surface.
**(27):** represents the wing of an aircraft.
**(28):** represents the network of sensors/DBD actuators manufactured as a sheet.

### Detailed Description

This invention comprises a dielectric barrier discharge plasma actuator composed of three electrodes. Figure 1 shows the physical outline of this novel invention where the high voltage electrodes can be distinguished from the dielectric barrier material (usually a high temperature resistant polymer, glass, Kapton or Teflon). Referring particularly to Figure 1, a simple sensor/actuator of this invention comprises: a dielectric layer (2), two electrodes positioned on the surface of the dielectric layer, wherein the exposed AC electrode (1) is energized with AC voltage and the sliding/nanosecond electrode (4), which is also exposed, is energized by a continuous voltage with a tendency for nanosecond pulses and an embedded electrode (3) which is not exposed to air and is connected to the ground plane (5). In another embodiment, the exposed voltage-energized electrode is also energized with nanosecond voltage pulses in the range of 10 ns to 100 ns.

One of the electrodes is embedded in a dielectric material and the remaining electrodes are exposed to free flow. Also observed in Figure 1 is the use of a DC power supply (7), an AC power supply (6) and a nanosecond range pulse generator circuit (8).

Preferably, the distance between the exposed electrode and the embedded electrode can be optimized in order to increase the performance of the plasma actuator. The power supply is configured to generate alternating current with frequency magnitudes in the order of kilohertz and voltage amplitudes in the order of kilovolt. Particularly the power supply can cause a modulated voltage. When the high voltage AC signal, which is applied to the exposed AC electrode (1), has sufficient voltage amplitudes (5-80 kVpp) and frequencies (1-60 kHz) a dynamic electric field change is produced and the intense electric field ionizes partially the adjacent air producing non-thermal plasma on the dielectric surface. Ionized air propagates from the front side of the exposed AC electrode (1) to the embedded electrode (3) creating a plasma track. The dielectric layer does not readily lead the current, so it prevents the formation of electric arc between the electrodes, which allows the electric field to suck the air down and form the plasma. The difference in potential applied leads to the change of charged ions in the plasma and some of these ions collide with the adjacent air molecules, which bounce in the same direction creating the so-called ionic wind. In this way, the plasma actuator accelerates the surrounding fluid. In this mode, the main flow control mechanism passes by movement induction to the adjacent flow. When the sliding/nanosecond electrode 4 is energized at the same time with a DC voltage with a tendency for nanosecond range pulses, a large plasma sheet is formed on the upper surface of the dielectric layer which covers the entire surface between the exposed AC electrode (1) and the sliding/nanosecond electrode (4), which in turn is also exposed. Collisions between neutral particles and accelerated ions give rise to a body force in the surrounding fluid leading to the formation of the so-called ionic wind. Body force can be used to induce a desired flow control of a fluid system. For the DBDs the amount of plasma and fluid movement induces an initial vortex propagating downstream from the exposed AC electrode (1) to the sliding/nanosecond electrode (4). The existence of the dielectric barrier introduces a region of high electric field force breakdown and therefore leads to high intensities in the plasma region. The discharge of plasma generated by the DBD triggers the ionization of the particles contained in the gas that is in the surrounding environment. Gas and surface heating due to plasma formation is caused by the work done by electric field ions, by the extinction of electronically energized species and by the impact of the elastic electrons with the ambient gas. The heat generated by the ionization is transmitted directly to the surface and is then positioned by the ionic wind thus preventing the formation of ice on that surface. In fact, a large part of the heat that is transferred to the dielectric layer derives from the convexity of the hot air flowing on its surface. The plasma actuator used in this invention is a DBD type actuator, which generates the so-called non-thermal plasma. The temperature of the ionized particles in this type of plasma is typically within the range of 40 °C to 100 °C, and as such the presence of plasma has no destructive effects on the materials to which they are applied. The shape of the DBD electrodes may optionally be changed to circular or serpentine forms in order to obtain different force fields and associated flows. This system also comprises a control module (11) that can automatically control the power supplies according to a predetermined criterion, allowing the automatic switching between ice, anti-icing and deicing detection modes of operation, based on the fact that the heating of the surface caused by the formation of plasma will increase with the increase of the applied voltage and the voltage applied in the ice detection mode is much lower than the voltage applied in the anti-icing and deicing modes. The system also includes at least one temperature sensor (12) whose output signal is used to analyse the formation of ice on the surface. The sensor allows determining the presence of freezing conditions. If there is a possibility of freezing conditions, the system operates in ice detection mode in order to indicate the presence of ice. Other control signals, for example relative to weather conditions, may optionally be supplied to the system from the control signal input module (13). The control module can easily switch between modes, and in the absence of favourable conditions for ice formation, the system can then be used as a flow control device. However, in case of detection of ice formation on the surface, the control module activates the power supply by appropriately adjusting the input signals of the exposed electrodes and the system starts running in deicing mode. The operating voltage is measured from a high voltage probe (10) and the current consumed by the DBD plasma actuator is obtained by measuring the voltage to the terminals of the monitoring capacitor (9) which is connected to the ground plane (5). The voltage and current measured during operation of the system can be obtained by the user from the monitoring system (14). The DBD is used as an ice detector sensor in a manner similar to a capacitive sensor. Since the permissivities of air, water and ice are different, the accumulation of charge on the surface of the dielectric material will also be different. From the measurement of the effect of each material on the electric field or the load on the surface the different materials can be identified. Figure 2 shows the electrical field disturbances near the sensor-actuator surface due to external contaminations such as water and ice layer. The exposed AC electrode (1) in this mode operates with a certain voltage and the embedded electrode (3) and the sliding/nanosecond electrode (4) act as charge receptors. The electric field (17), close to the surface, makes it possible to distinguish the presence of an ice layer (15) or a water layer (16) partially covering the surface. Using this principle, the DBD functions as an ice detector sensor. The energized voltage that is required for ice detection purposes is low and can be defined according to the capacity used for measuring surface charges. The ice sensor accordingly notifies the system on the existence of ice so that it can melt precisely and carefully the ice where it is needed and only when it is needed.

Figure 3 shows thermal images obtained by Infrared techniques and the spatial variation of the temperatures along x and y of conventional DBD plasma actuators but with different layers of dielectric material. In this Figure, (1) represents the exposed AC electrode. As the applied voltage increases, the heating of the surface provided by the plasma actuator is improved. This is used as the basis for the control system, which controls the supply voltage and from this control it can switch between the anti-icing and deicing modes. If a layer of thinner dielectric material is used the heating effect is also improved. Therefore, thinner dielectric layers can also be used in the manufacture of the present invention in order to improve its efficiency in surface heating.

Figure 4 shows the plasma surface extension for typical plasma actuators with two electrodes with applied voltages of different amplitudes, where (3) represents the embedded electrode, (18) represents the plasma discharge region, (1) represents the exposed AC electrode and (19) represents the length of the plasma. When the applied voltage is increased, the plasma surface extends over a larger area. This again confirms that the control system can be used to change the applied voltage depending on the different purposes of deicing or anti-icing operation.

Figure 5 demonstrates an ice protection system on the surface of a wing using multiple sensors and DBD actuators. The different layers of the system including the electrodes and the dielectric layer are shown, in which (1) represents the exposed AC electrode, (2) represents the dielectric layer, (3) represents the embedded electrode, (20) represents a wing profile and (21) represents the sensor/actuator applied to the front surface of the wing representing one of the most critical areas for ice formation. By using multiple sensors/actuators it is then possible to cover larger surfaces. When an ice layer is formed in the front area of the wing (25), the actuator system will be activated in deicing mode by rapidly removing the ice from the surface.

In this case the exposed AC electrode (1) will be energized with high AC voltage and at the same time the sliding/nanosecond electrode will be fed with nanosecond pulse high voltage. In view of the formation of plasma on the surface, the surface temperature of the wing increases to a temperature higher than the melting temperature of the water. The formation of micro-shockwaves together with a rapid heating of the sliding/nanosecond electrode (4) will separate the ice layer from the surface. Thus, the ice present on the front edge of the wing is melted and poured out by the flow around the wing. A few drops of water (22) resulting from the deicing performed on the front edge of the wing will be drawn by the flow to the surface of the wing. If the rear part of the wing is not protected, then an ice layer forms in the area behind the effective area of the plasma (23). A portion of this reforming ice layer will be melted by the heat produced by the pulse electrode in the nanosecond range and the remaining portion will be melted by the second sensor/actuator which is installed on the surface.

Figure 6 shows multiple DBD actuators for flow control on curved surfaces. In this Figure (26) represents the curved surface, (1) represents the exposed AC electrode, (3) represents the embedded electrode and (18) represents the plasma discharge region. Since DBD sensors/actuators are composed of thin, flexible layers of electrodes and dielectric material, they can be used on a variety of surfaces including flat or curved surfaces. Therefore, they can be applied to practically all kinds of surfaces.

Figure 7 schematises a top view of an aircraft wing equipped with a network of these DBD sensor/actuator systems, manufactured from circuit printing technology as flexible surfaces embedded in the wing surface and exposed to air, wherein (27) represents the wing of an aircraft, (28) represents the network of DBD sensors/actuators manufactured as a sheet, (1) represents the exposed AC electrode, (2) represents the dielectric layer, (3) represents the embedded electrode, and (4) represents the sliding/nanosecond electrode. The DBD sensor/actuator sets are staggered between each other and are connected in parallel forming a sensor/actuator network capable of covering the entire aerodynamic surface. This network of actuators comprises a number of flexible sheets each containing multiple DBD sensors/actuators intended to be applied to surfaces for control thereof and prepared to generate multiple plasma discharges in order to induce a flow of ionized hot particles in the direction of the surface. By using circuit printing technology, customizing the dimensions of the DBD sensors/actuators is something that is done with extreme ease. The production of continuous and flexible bands of DBD sensor/actuator networks from printing technology also ensures the reduction of installation and maintenance costs.

### Application Examples

The present invention has various industrial applications such as deicing and flow control in aircraft components including fixed wings, stabilizers, jet engine inlet, engine inlet, helicopter rotor blades, rotary blades, air turbine blades.

It can also be applied as a deicing system in critical tubular systems.

### References

[1] E. MERLO, A. Gurioli, E. MAGNOLI, G. MATTIUZZO, R. PERTILE, System for preventing icing on an aircraft surface operationally exposed to air, WO 2014122568 A1, 2014.
[2] S.G. Saddoughi, B.J. Badding, P. Giguere, M.P. Boespflug, J.G.A. Bennett, A. Gupta, System for deicing a wind turbine blade, EP 2365219 A2, 2011.
[3] S.G. Saddoughi, B.J. Badding, P. Giguere, M.P. Boespflug, G.A. Bennett, A. Gupta, System and method of deicing and prevention or delay of flow separation over wind turbine blades, US 8038397 B2, 2011.
[4] S.G. Saddoughi, B.J. Badding, P. Giguere, M.P. Boespflug, G.A. Bennett, JR, A. Gupta, System and method of deicing and prevention or delay of flow separation over wind turbine blades, US20110135467 A1, 2011. [5] G. Herbaut, D. Bouillon, Splitter nose with plasma deicing for axial turbomachine compressor, CA 2908979 A1, 2016.
[6] G. CORREALE, I. Popov, Boundary layer control via nanosecond dielectric/resistive barrier discharge, WO 2015024601 A1, 2015.
[7] W. Guang-qiu, X. Bang-meng, Y. Guang-quan, Laminated plate aircraft skin with flow control and deicing prevention functions, CN 102991666 A, 2013.
[8] C. Jinsheng, T. Yongqiang, M. Xuan-shi, Z. Qi, Icing removing device and method of dielectric barrier discharge plasma, CN 104890881 A, 2015.
[9] R. Miles, S. Macheret, M. Shneider, A. Likhanskii, J. Silkey, Systems and methods for controlling flows with electrical pulses, US 20080023589 A1, 2008.
[10] R.B. Miles, S.O. Macheret, M. Shneider, A. Likhanskii, J.S. Silkey, Systems and methods for controlling flows with electrical pulses, US 7744039 B2, 2010 .
[11] L.M. Weinstein, Ice detector, US 4766369 A, 1988.
[12] J.J. Gerardi, G.A. Hickman, A.A. Khatkhate, D.A. Pruzan, Apparatus for measuring ice distribution profiles, US 5398547 A, 1995.
[13] Surface Dielectric Barrier Discharge Plasma Actuators, (n.d.).
[14] G.W. Codner, D.A. Pruzan, R.L. Rauckhorst, A.D. Reich, D.B. Sweet, Impedance type ice detector, US 5955887 A, 1999.
[15] V. Correia, C. Caparros, C. Casellas, L. Francesch, J.G. Rocha, S. Lanceros-Mendez, Development of inkjet printed strain sensors, Smart Mater. Struct. 22 (2103) 105028.
[16] S. Khan, L. Lorenzelli, R.S. Dahiya, Technologies for Printing Sensors and Electronics Over Large Flexible Substrates: A Review, IEEE Sens. J. 15 (2015) 3164-3185.

## Claims

1. Ice detection/protection system with ice detection, anti-icing and deicing operating modes and flow control comprising at least one dielectric barrier discharge plasma actuator, a DC power supply (7), Z an AC power supply (6), a high voltage probe (10), a nanosecond range pulse generator circuit (8), and a control module (11), applicable on any surface;
wherein the at least one dielectric barrier discharge plasma actuator is configured to act as an ice-forming sensor, to control the flow and to perform surface deicing, is connected in series with a monitoring capacitor (9), and comprises a dielectric layer (2) and three electrodes (1) (3) (4),
wherein two electrodes (1) (4) among said three electrodes are exposed to air and positioned on the surface of the dielectric layer (2), the AC power supply being configured to energize one of the two exposed electrodes with AC high voltage, and the DC power supply and the nanosecond range pulse generator circuit being configured to energize the other one of the two exposed electrodes with nanosecond pulse high voltage,
wherein the remaining electrode (3) among said three electrodes is embedded in the dielectric layer (2) and not exposed to air.

2. System according to the preceding claim, wherein the control module (11) is configured to switch the power supplies (6,7) between the ice detection, anti-icing and deicing operating modes.

3. System according to any of claims 1 to 2, wherein the DC power supply and the nanosecond range pulse generator circuit (8) are configured to generate a pulsed voltage with a duration in the range of 10ns to 100 ns.

4. System according to any of the preceding claims, wherein the embedded electrode (3) is separated from the exposed electrodes by dielectric material and is connected to the monitoring capacitor (9), which is connected to a ground plane (5) and is configured to monitor variations of the electric field of the at least one dielectric barrier discharge plasma actuator.

5. System according to any of the preceding claims, wherein the AC power supply (6) is configured to apply an AC high voltage signal to the exposed AC electrode (1) with a voltage amplitude between 5 and 80 kVpp and frequencies between 1 and 60 kHz in the anti-icing and deicing operating modes.

6. System according to any of the preceding claims, comprising at least one temperature sensor (12).

7. System according to any of the preceding claims, comprising a control signal input module (13).

8. System according to any of the claims 6 to 10, wherein, in case of ice formation, the control module (11) is configured to control the power supplies (6,7) and to adjust the input voltage signals of the exposed electrodes (1)(4).

9. System according to claim 1, wherein the high voltage probe (10) is configured to measure an operating voltage.

10. System according to any of the preceding claims, comprising a monitoring system (14) .

11. System according to any of the preceding claims, wherein the at least one dielectric barrier discharge plasma actuator is manufactured by circuit printing technology with embedded temperature sensors (12).

12. Use of the system according to any of the preceding claims on aircraft surfaces.

## Patentansprüche

1. Eiserkennungs-/Schutzsystem mit Eiserkennung, Anti-Eisbildung und Enteisungsbetriebsmodi, sowie Durchflussregelung, bestehend aus mindestens einem dielektrischen Barrierenentladungs-Plasma-Aktuator, einer Gleichstromversorgung (7), einer Wechselstromversorgung (6), einer Hochspannungssonde (10), einer Impulsgeneratorschaltung im Nanosekundenbereich (8), sowie ein Steuermodul (11), das auf jeglicher beliebigen Oberfläche einsetzbar ist;
wobei der mindestens eine dielektrische Barriereentladungs-Plasma-Aktuator ausgelegt ist, um als Eisbildungssensor zu wirken, die Strömung zu steuern und die Oberflächenenteisung auszuführen, in Serie mit einem Überwachungskondensator (9) geschaltet ist und
eine dielektrische Schicht (2) sowie drei Elektroden (1) (3) (4) umfasst,
wobei zwei Elektroden (1) (4) der drei erwähnten Elektroden der Luft ausgesetzt sind und
auf der Oberfläche der dielektrischen Schicht (2) angeordnet sind, wobei die Wechselstromversorgung so ausgelegt ist, dass sie eine der zwei freiliegenden Elektroden mit Wechselstrom-Hochspannung versorgt, und die Gleichstromversorgung sowie die Nanosekunden-Impulsgeneratorschaltung ausgelegt sind um die andere der beiden freiliegenden Elektroden mit Nanosekunden-Impuls-Hochspannung zu versorgen, wobei die verbleibende Elektrode (3) unter den drei erwähnten Elektroden in die dielektrische Schicht (2) eingebettet und nicht der Luft ausgesetzt ist.

2. System gemäß dem vorhergehenden Anspruch, wobei das Steuermodul (11) so ausgelegt ist, dass es die Stromversorgungen (6, 7) zwischen den Betriebsmodi Eiserkennung, Anti-Eisbildung und Enteisung schaltet.

3. System gemäß einem der Ansprüche 1 bis 2, wobei die Gleichstromversorgung und
die Impulsgeneratorschaltung im Nanosekundenbereich (8) ausgelegt sind,
um eine gepulste Spannung mit einer Dauer im Bereich von 10 ns bis 100 ns zu erzeugen.

4. System, gemäß einem der vorangegangenen Ansprüche,
wobei
die eingebettete Elektrode (3) mittels dielektrischen Materials von den freiliegenden Elektroden getrennt ist und mit dem Überwachungskondensator (9) verbunden ist,
der mit einer Masseebene (5) verbunden
und dazu ausgelegt ist,
die Schwankungen des elektrischen
Feldes des mindestens einen dielektrischen Barriereentladungs-Plasma-Aktuators zu überwachen.

5. System, gemäß einem der vorhergehenden Ansprüche, wobei die Wechselstromversorgung (6) dazu ausgelegt ist, ein Wechselstrom-Hochspannungssignal an die freiliegende Wechselstromelektrode (1) mit einer Spannungsamplitude zwischen 5 und 80 kVpp und Frequenzen zwischen 1 und 60 kHz in den Betriebsmodi Anti-Eisbildung und Enteisung anzuwenden.

6. System, gemäß einem der vorhergehenden Ansprüche, das mindestens einen Temperatursensor (12) umfasst.

7. System, gemäß einem der vorhergehenden Ansprüche, das ein Kontrollsignal-Eingangsmodul (13) umfasst.

8. System, gemäß einem der Ansprüche 6 bis 10, wobei, im Falle der Eisbildung, das Steuermodul (11) dazu ausgelegt ist, die Stromversorgungen (6, 7) zu steuern sowie die Eingangsspannungssignale der freiliegenden Elektroden (1)(4) einzustellen.

9. System, gemäß Anspruch 1, wobei die Hochspannungssonde (10) dazu ausgelegt ist, eine Betriebsspannung zu messen.

10. System, gemäß einem der vorhergehenden Ansprüche, das ein Überwachungssystem (14) umfasst.

11. System, gemäß einem der vorhergehenden Ansprüche, wobei mindestens ein dielektrischer Barrierenentladungs-Plasma-Aktuator mittels der Schaltungsdrucktechnik mit eingebetteten Temperatursensoren (12) erzeugt wird.

12. Anwendung des Systems, gemäß einem der vorhergehenden Ansprüche, auf Flugzeugoberflächen.

## Revendications

1. Système de détection de/protection contre le givre avec modes de fonctionnement de détection de givre, d'antigivrage et de dégivrage et commande de flux comprenant au moins un actionneur à décharge de plasma à barrière diélectrique, une alimentation en courant continu (7), une alimentation en courant alternatif
(6), une sonde à haute tension (10), un circuit générateur d'impulsions dans la gamme des nanosecondes
(8), et un module de commande (11), applicable sur n'importe quelle surface ; dans lequel l'au moins un actionneur à décharge de plasma à barrière diélectrique
est configuré pour agir comme un capteur de formation de givre, pour commander le flux et pour effectuer le dégivrage de surface, est connecté en série avec un condensateur de surveillance (9), et
comprend une couche diélectrique (2) et trois électrodes (1) (3) (4),
dans lesquelles deux électrodes (1) (4) parmi lesdites trois électrodes sont exposées à l'air et
positionnées sur la surface de la couche diélectrique (2), l'alimentation en courant alternatif étant configurée pour alimenter une parmi les deux électrodes exposées avec une haute tension en courant alternatif, et l'alimentation en courant continu et le circuit générateur d'impulsions dans la gamme des nanosecondes étant configurés pour alimenter l'autre parmi les deux électrodes exposées avec une haute tension d'impulsion en nanosecondes, dans lesquelles l'électrode restante (3) parmi lesdites trois électrodes est intégrée dans la couche diélectrique (2) et non exposée à l'air.

2. Système selon les revendications précédentes, dans lequel le
module de commande (11) est configuré pour commuter les alimentations en courant (6, 7) entre les modes de fonctionnement de détection de givre, d'antigivrage et de dégivrage.

3. Système selon l'une quelconque des revendications 1 à 2, dans lequel l'alimentation en courant continu et
le circuit générateur d'impulsions dans la gamme des nanosecondes (8) sont configurés pour générer
une tension pulsée ayant une durée dans la plage allant de 10ns à 100 ns.

4. Système selon l'une quelconque des revendications précédentes,
dans lequel
l'électrode intégrée (3) est séparée des électrodes exposées par un matériau diélectrique et est connectée au condensateur de surveillance (9),
qui est connecté à un plan de masse (5)
et est configurée
pour surveiller des variations du champ
électrique de l'au moins un actionneur à décharge de plasma à barrière diélectrique.

5. Système selon l'une quelconque des revendications précédentes, dans lequel l'alimentation en courant alternatif (6) est configurée
pour appliquer un signal de haute tension en courant alternatif à l'électrode à courant alternatif exposée (1) avec une amplitude de tension comprise entre 5 et 80 kVpp et des fréquences comprises entre 1 et 60 kHz dans les modes de fonctionnement d'antigivrage et de dégivrage.

6. Système selon l'une quelconque des revendications précédentes, comprenant au moins un
capteur de température (12).

7. Système selon l'une quelconque des revendications précédentes, comprenant un module d'entrée de signal de commande (13).

8. Système selon l'une quelconque des revendications 6 à 10, dans lequel, en cas de formation de givre, le
module de commande (11) est configuré pour commander les alimentations en courant (6, 7) et
pour régler les signaux de tension d'entrée des électrodes exposées (1)(4).

9. Système selon la revendication 1, dans lequel la sonde à haute tension (10) est configurée pour mesurer une tension de fonctionnement.

10. Système selon l'une quelconque des revendications précédentes, comprenant un système de surveillance (14).

11. Système selon l'une quelconque des revendications précédentes, dans lequel l'au moins un actionneur à décharge de plasma
à barrière diélectrique est fabriqué
via une technologie de circuit imprimé avec des capteurs de température intégrés (12).

12. Utilisation du système selon l'une quelconque des revendications précédentes sur des surfaces d'aéronefs.
